# EUROPEAN PATENT APPLICATION

(11) **EP 2 293 262 A1**
(43) Date of publication of application: **09.03.2011**
(21) Application number: 09829993.6
(22) Date of filing: 06.11.2009
(51) Int. Cl.: G07F 5/18, G07F 11/00

(54) **AUTOMATIC SELLING SYSTEM FOR HOTEL AND GUEST HOUSE**

(30) Priority: 03.12.2008 CN 200810219637
(71) Applicant: Foshan Nanhai Cornucopia Digital Electric Co., Ltd, Guangdong 528200 (CN)
(72) Inventor: GUAN, Jianwen, Guangdong 528200 (CN); LIN, Defang, Guangdong 528200 (CN); LIU, Zhishang, Guangdong 528200 (CN)
(74) Representative: Beck & Rössig European Patent Attorneys
(86) International application number: PCT/CN2009/074829
(87) International publication number: WO 2010/063209

(57) **Abstract**

An automatic vendor system used in hotels is provided, comprising: automatic vending machines each having a man-machine interaction interface, being used as vending and pickup platforms; a host being configurable for operation control, monitoring and storing information, which has a plurality of automatic vendor and management functions; a plurality of local shopping networks are formed and arranged in a hotel to generate a chain store network in an area through connection of computer network; through a information transfer link of production-direct marketing constructed with the sales information from the local networks, shortage of goods in a day is collected so as to supplement goods in the single vending machines; customers select goods through a touch screen after receiving an electronic cash card, then the host inquires cash amount through the reader and send an delivery instruction to the control board, the control board records and subtracts quantity of the purchased goods, and control a corresponding transfer channel to deliver the goods; meanwhile the host uploads the transaction record, and commands a printer to print out a voucher. The present invention has advantages of an integration of online shopping, electronic consumer system and automatic vending machines.

## Description

### FIELD OF THE INVENTION

The present invention relates generally to intelligent management systems, and more particularly, to an automatic vendor system used in hotels, which is integrated with functions of electronic currency, such as online shopping and IC card, and automatic vending and unified distribution, aiming to provide convenience for the shoppers and also provide efficient and effective management for the owners.

### BACKGROUND OF THE INVENTION

Most of the conventional automatic vendor systems in public places sell goods with a single vending machine. Only one vending machine is located in a shopping area to complete vending functions such as check-out, giving change, and delivery independently. In such a case, customers buy the goods via inserting coins or applying a payment card, and out-of-stock goods in the machine may be supplemented in time by the operator. Such a vending machine does not utilize a database to store various consumption records and financial management information, thus the machine cannot monitor the consumption and collect business information timely, such as consuming quantity, variety, and amount of money, etc., in a day, a month or a certain interval. Additionally, the single vending machine is generally scattered in a relatively wide area, and is supplemented and maintained manually by the operator through a circulating checking. Therefore, the conventional arrangement of a single vending machine has disadvantages of high difficulty and cost for management, and is inconvenient to customers.

It is also known a network of vending system comprising wired and wireless vending machines. Most of these kinds of system sell only single category of goods because the system may serve a huge area. Examples are gas stations, beverage machines and so on, which mainly serve targeted groups with specific demands. The networked single vending machine can not provide a selection of various kinds of goods to customers, therefore it has not became a multifunctional self-pickup platform for online shopping with many kinds of goods. Entities bought online via a computer or a mobile phone need be delivered to the customers by express delivery. There is no self-pickup platform for the customers. The customers need to inspect on site for goods delivered after a relatively long time. Goods may be returned and the delivery cost is increased.

### SUMMARY OF THE INVENTION

In view of the problems in the prior art, the present invention provides an automatic vendor system used in hotels, which is integrated with online shopping, electronic consumer system and automatic vending machines.

In one aspect of the present invention, an automatic vendor system used in hotels is provided, comprising: a plurality of automatic vending machines used as vending and pickup platforms, each having a man-machine interaction interface; a host being configurable for operation control, monitoring and storing information, which has a plurality of automatic vendor and management functions; a plurality of local shopping networks are formed and arranged in a hotel to generate a chain store network in an area through connection of computer network; through a information transfer link of production-direct marketing constructed with the sales information from the local networks, shortage of goods in a day is collected so as to supplement goods in the single vending machine; the customers select goods through a touch screen after receiving an electronic cash card, then the host inquires cash amount through the reader and send an delivery instruction to the control board, the control board records and subtracts quantity of the purchased goods, and control a corresponding transfer channel to deliver the goods; meanwhile the host uploads the transaction record, and commands a printer to print out a voucher.

Advantageously, the automatic vending machines with a man-machine interaction interface show and introduce samples of goods to be sold in animation or movie.

Advantageously, the animation or movie comprise dynamic three-dimensional images for simulating a person entering in to a store to select the required goods, which have three levels, i.e., a level for simulating the shopper entering into the store, a level for selecting goods, and a level for determining the purchased goods.

With the technical solution of the present invention, a wired and wireless automatic shopping local network is established, which transfer data via GPRS or Internet, having a host managing and processing sales information of a plurality of automatic vending machines. The customers can inquire, order the goods via network connection through a computer or a mobile phone either on the way or in home. The customers may then pick up the purchased goods from the nearest automatic vending machine. The customers can pay the order directly at the single automatic vending machine by an electronic cash card such as IC card. Such a multiple shopping mode provides a shopping environment simulating a virtual shopping mall.

### BRIEF DESCRIPTION OF THE DRAWINGS

The drawings illustrate one or more embodiments of the invention and, together with the written description, serve to explain the principles of the invention, and wherein:
Fig.1 is a structural diagram of an exemplary system in accordance with the present invention.
Fig.2 is a block diagram of hardware devices of the system in accordance with an embodiment of the present invention.

### DETAILED DESCRIPTION OF THE INVENTION

The present invention is explained in the following description of the preferred embodiment taken in conjunction with the following drawings. It should be understood that the embodiments described here are only for the purposes of illustration and description and is not exhaustive or to limit the invention to the precise forms disclosed.

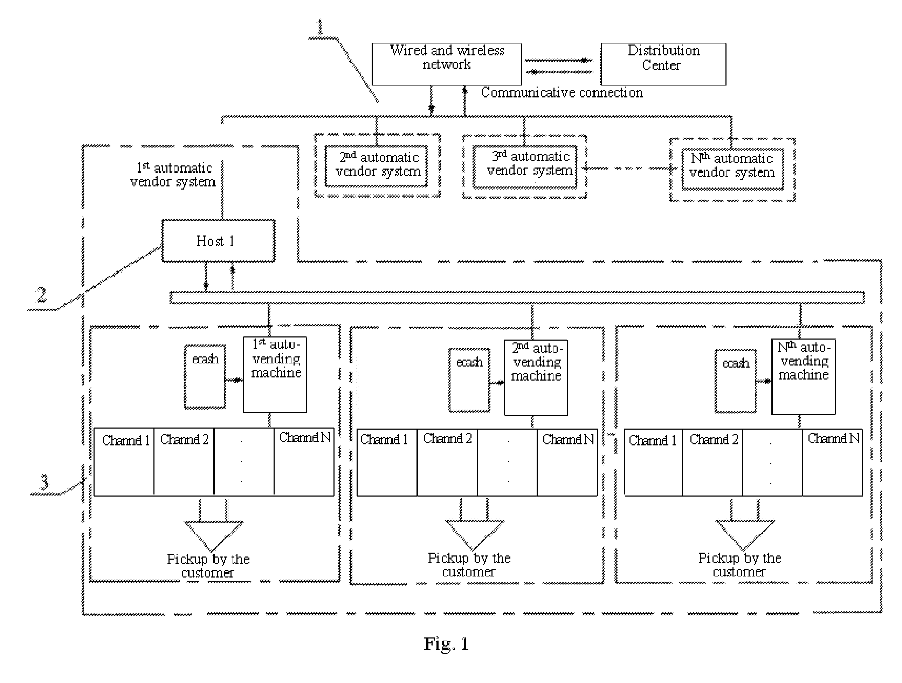

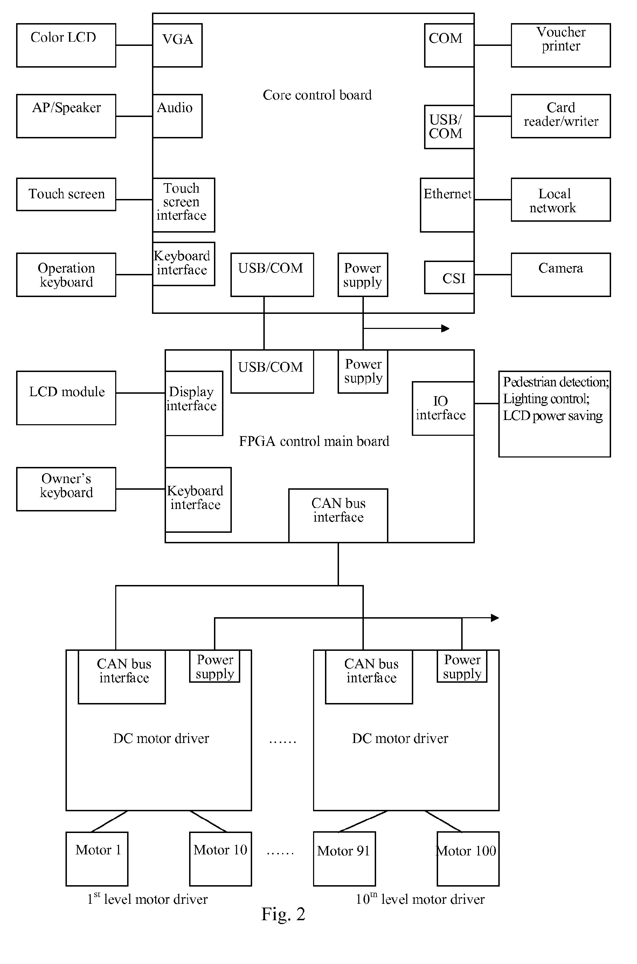

Referring to Fig. 1 and Fig. 2, an embodiment according to the present invention is show, comprising:
A. A host 2 is constructed for operation control, monitoring and storing information, which has a plurality of automatic vendor and management functions. The host 2 is located at the reception of a place such as a hotel or a guesthouse. N single automatic vending machines are arranged within each floor and each room respectively. The host 2 comprises a PC with enough memory capacity, which is operable to support a device for distributing electronic cash cards, support storage and conversion of sales information of the single vending machines, support a printer for printing various financial and management reports, support a network switching device connected with wired and wireless network, and support video communication with a display of the single vending machines. The host is connected with the N single automatic vending machines through a broadband network, to form a local network of automatic vending with the peripheral devices including the card distributing device, the printer, and a camera.
B. 1~N local shopping networks 1 are formed. A distribution center is arranged in an area. The distribution center can extract sales information from each of the local networks via wired and wireless connection, so as to supplement the goods in short supply correctly in time. Manufactures also can timely adjust variety and quantity of goods to be produced based on the sales information. Thus a new direct marketing mode with a system of production, supply and marketing is generated.
C. An automatic vending machine having a man-machine interaction interface is utilized as a vending and pickup platform 3. The single automatic vending machine utilizes the following technical means to achieve functions of charging, showing attributes of goods in the machine, providing a voucher, storing and exchanging with the host the sales information, fault alarming, and short goods searching, etc.
   1) The automatic vending machine with a man-machine interaction interface shows and introduces samples of goods to be sold in animation or movie. The animation or movie comprise dynamic three-dimensional images for simulating a person entering in to a store to select the required goods, which have three levels, i.e., a level for simulating the shopper entering into the store, a level for selecting goods, and a level for determining the purchased goods. A touch screen is arranged at an appropriate position in front of the vending machine. The touch screen is used as an operating interface of the customers' shopping activities. This interface utilizes live graphics to simulate shopping scene in the store, thereby providing goods attributes including unit price, shape and package of the goods for the customers, and providing operations for goods selection and determination for the customers.
   2) A reader supporting various kinds of electronic cash is provided to charge fees of the purchased goods.
   3) A piece of control main board installed with sales system software is arranged in the automatic vending machine, which is used as a core control component of the automatic vending machine.
   4) A motor driving plate is provided, which receives instructions to drive a motor running so as to push the purchased goods into a pickup cabin.
   5) A printer is installed to provide purchasing voucher for the customers.
   6) An operating keyboard for owners is provided and used to set a selection of transfer channel, set time, supplement goods and change goods by the owners.
   7) A video telephone is provided and used to provide a direct communication with the host for the customers.
   8) The single automatic vending machine has data storage function, and can work offline when the host is busy or shut off.

With the above configuration of the host, the platform, and the local network, the customers firstly receive an electronic cash card, then select goods through the touch screen. The host inquires cash amount through the reader, and send a delivery instruction to the control board. Then the control board records and subtracts quantity of the purchased goods, and control a corresponding transfer channel to deliver the goods. At the same time, the host uploads the transaction record, and commands the printer to print out a voucher. Then a deal is ended.

The foregoing description of the exemplary embodiments of the invention has been presented only for the purposes of illustration and description and is not intended to be exhaustive or to limit the invention to the precise forms disclosed. Many modifications and variations are possible in light of the above teaching without departing from the protection scope of the present invention.

## Claims

1. An automatic vendor system used in hotels, comprising: a plurality of automatic vending machines used as vending and pickup platforms, each having a man-machine interaction interface; a host being configurable for operation control, monitoring and storing information, which has a plurality of automatic vendor and management functions; a plurality of local shopping networks are formed and arranged in a hotel to generate a chain store network in an area through connection of computer network; through a information transfer link of production-direct marketing constructed with the sales information from the local networks, shortage of goods in a day is collected so as to supplement goods in the single vending machine; the customers select goods through a touch screen after receiving an electronic cash card, then the host inquires cash amount through the reader and send an delivery instruction to the control board, the control board records and subtracts quantity of the purchased goods, and control a corresponding transfer channel to deliver the goods; meanwhile the host uploads the transaction record, and commands a printer to print out a voucher.

2. The automatic vendor system used in hotels according to claim 1, wherein the automatic vending machines with a man-machine interaction interface show and introduce samples of goods to be sold in animation or movie.

3. The automatic vendor system used in hotels according to claim 2, wherein the animation or movie comprises dynamic three-dimensional images for simulating a person entering in to a store to select the required goods, which have three levels, i.e., a level for simulating the shopper entering into the store, a level for selecting goods, and a level for determining the purchased goods.
